# Europäisches Patentamt

## European Patent Office

## Office européen des brevets

(19)

(11) Veröffentlichungsnummer: **0 079 003**
**B1**

(12) # EUROPÄISCHE PATENTSCHRIFT

(45) Veröffentlichungstag der Patentschrift:
09.04.86

(51) Int. Cl.⁴: **F 27 B 9/20,** B 65 G 25/02,
F 26 B 15/12

(21) Anmeldenummer: 82109981.9

(22) Anmeldetag: 28.10.82

(54) Hubbalkenofen.

(30) Priorität: 07.11.81 DE 3144328

(43) Veröffentlichungstag der Anmeldung:
18.05.83 Patentblatt 83/20

(45) Bekanntmachung des Hinweises auf die Patenterteilung:
09.04.86 Patentblatt 86/15

(84) Benannte Vertragsstaaten:
AT BE CH FR GB IT LI LU NL SE

(56) Entgegenhaltungen:
DE - A - 1 533 980
DE - A - 2 142 462
DE - A - 2 926 661
FR - A - 2 135 016
GB - A - 1 417 373
GB - A - 1 473 645
US - A - 2 684 769

(73) Patentinhaber: ITALIMPIANTI Società Italiana Impianti p.a., Piazza Piccapietra, 9, I-16121 Genova (IT)

(72) Erfinder: Ballabene, Corrado, Rathelbecker Weg 44, D-4006 Erkrath 1 (DE)
Erfinder: Dötsch, Horst, Rathelbecker Weg 3, D-4006 Erkrath 1 (DE)

(74) Vertreter: Porsia, Bruno et al, c/o Succ. Ing. Fischetti & Weber Via Caffaro 3, I-16124 Genova (IT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Hubbalkenofen mit einem aus abwechselnd angeordneten Fest- und Hubbalken bestehenden Herd, bei dem den Hubbalken auf bezüglich des Arbeitshubes verlängerten Schrägen verfahrbare, in einem Hubrahmen gelagerte Hubrollen zugeordnet sind.

Ein derartiger Hubbalkenofen ist aus der DE-A-2 926 661 bekannt. Jeder Hubbalken läßt sich mittels auf den Schrägen verfahrbarer Hubrollen über die Ofensohle hinaus zusammen mit dem Glühgut anheben und dann verschieben, woraufhin die Hubbalken wieder unter die Ofensohle abgesenkt und in die Ursprungsstellung zurückgefahren werden. Auf diese Weise läßt sich das Glühgut schrittweise durch den Glühofen bewegen. Die Schrägen, auf denen die Hubrollen laufen, sind so weit verlängert, daß sich die Hubbalken bis in eine untere Stellung absenken lassen, in der sie und die Festbalken für Reparaturzwecke zugänglich sind. Als Bewegungsantrieb der Hubrollen dient eine an einem Hubrahmen angelenkte verlängerbare Vorsatzstange, die an einem einerseits in einer Konsole gelagerten und andererseits von einer Kolbenzylindereinheit beaufschlagten Schwenkhebel befestigt ist. Um den Hubbalken in die Reparaturstellung abzusenken, wird der Hubrahmen entsprechend dem Kolbenhub der Kolbenzylindereinheit verfahren und gegen ein weiteres Verschieben gesichert. Alsdann werden die Vorsatzstangen vom Schwenkhebel gelöst und der Kolben der Kolbenzylindereinheit in die andere Extremstellung zurückgefahren. Dann wird eine Verlängerung zwischen Vorsatzstange und Schwenkhebel eingesetzt und die Verriegelung des Hubrahmens gelöst. Die Kolbenzylindereinheit läßt sich dann erneut so ausfahren, daß sich eine zusätzliche Abwärtsbewegung des Hubbalkens ergibt. Auf diese Weise wird Schritt um Schritt die Vorsatzstange verlängert und die Hubrollen rollen auf der Schräge immer weiter abwärts. Der Hubbalken folgt dieser Absenkbewegung entsprechend.

Durch Anlenken der Vorsatzstange an vom Schwenkpunkt des Schwenkhebels unterschiedlich entfernte Anlenkpunkte ergibt sich zwar ein unterschiedliches Übersetzungsverhältnis zwischen der Bewegung der Kolbenzylindereinheit und der Bewegung der Vorsatzstange und damit des Hubbalkens, jedoch läßt sich dieses Übersetzungsverhältnis nur in einem kleinen Bereich verändern, der etwa bei 2:1 liegt, da ein Kompromiß zwischen dem Arbeitshub und dem Reparaturhub gefunden werden muß, wenn der Reparaturhub aus möglichst wenigen Schritten bestehen soll. Das Festlegen der Vorsatzstange nach jedem Absenkschritt und das Einsetzen der Verlängerungen bedingen einen zusätzlichen Aufwand, insbesondere wenn der Reparaturhub eine größere Anzahl Einzelschritte erfordert. Bei kleineren Hubbalkenöfen macht sich dieser Nachteil nicht so sehr bemerkbar, da der Gewichtsunterschied zwischen einem beladenen Hubbalken, der die Arbeitshübe ausführt, und einem entlasteten, in die Reparaturstellung abzusenkenden Hubbalken nicht allzu groß ist.

Wird jedoch der Hubbalkenofen in seinen Abmessungen vergrößert, dann machen sich die Gewichtsunterschiede bemerkbar und führen entweder zu der Notwendigkeit, den Reparaturhub in eine große Anzahl von Einzelschritten zu unterteilen oder aber die Antriebsvorrichtung für den Hubbalken erheblich zu verstärken.

Aus der DE-A-2 142 462 und der GB-A-1 417 373 ist es bekannt, die Hubbewegung der Hubbalken über ein drehbar gelagertes Rad zu steuern, an dem eine Schubstange als Kraftübertragungselement angelenkt ist. Hierbei sind jedoch keine Massnahmen zum Absenken der Hubbalken, z.B. für Reparaturzwecke, unter die normale Arbeitsebene vorgesehen.

Ausgehend von der Erkenntnis, daß nur der Arbeitshub einen großen Kraftaufwand erfordert, während der weitere Absenkhub für Reparaturzwecke grundsätzlich ohne Last erfolgt, liegt der Erfindung die Aufgabe zugrunde, den Hubbalkenofen der eingangs erwähnten Art so zu verbessern, daß bei weiterhin einfachem Aufbau und mit möglichst geringem Aufwand der Arbeitshub eine verhältnismäßig geringere Antriebskraft erfordert und der Reparatur hub mit größerer Geschwindigkeit erfolgt.

Die erfindungsgemässe Lösung dieser Aufgabe besteht in einem einerseits an einem Hubrahmen und andererseits an einem drehbar gelagerten Rad angelenkten Kraftübertragungselement und in einem Lagerbock für das Rad, der mehrere, mit mehreren auf dem Umfang des Rades verteilten Bohrungen zusammenwirkende Bolzendurchführungen für Arretierbolzen aufweist.

Auf diese Weise erübrigt sich ein langer und schwerer Schwenkhebel und der Hubbalken kann in jeder Stellung durch Blockieren des Rades arretiert werden.

Die im Rad verteilten Bohrungen dienen zusätzlich dazu, ein Anlenkauge an der Antriebseinheit mittels eines umsteckbaren Bolzens an verschiedenen Stellen mit dem Rad zu verbinden, so daß sich trotz eines verhältnismäßig geringen Hubes der Antriebseinheit schrittweise eine halbe Umdrehung des Rades oder mehr ergibt.

Andererseits können in an sich bekannter Weise auch die Schrägen mit einer flachen Steigung für den Arbeitshub und einer steileren Steigung für den Reparatur- bzw. Absenkhub versehen sein. Diese Ausgestaltung der Schrägen bringt den Vorteil, daß der Arbeitshub nur gering zu sein braucht und somit der Kraftaufwand über eine flache Schräge auch unter hoher Belastung erheblich geringer ist als mit einer steileren Schräge, wie sie für den Absenkhub vorgesehen ist.

Mit Schrägen für die Hubrollen mit einem flachen und einem steileren Steigungsbereich oder auch mit einer durchgehenden Schräge läßt sich eine veränderliche Übersetzung des Hubbalkenantriebes erfindungsgemäß durch ein ohne Abstützung auf dem Radumfang am Rad angelenktes Kraftübertragungselement erreichen. Besteht dieses Kraftübertragungselement aus einer mit dem Hubrahmen verbundenen Vorsatzstange, so ist diese am Rad so angelenkt, daß für den Arbeitshub die Drehung des Rades um den Hub der Antriebseinheit nur eine geringe Verschiebebewegung der Vorsatzstange und damit geringe Hubbewegung des Hubbalkens bewirkt, während der Absenkhub für Reparaturzwecke einer fast tangentialen Bewegung der Vorsatzstange am Rad mit einem entsprechend großem Hub entspricht.

Dient als Kraftübertragungselement ein flexibles Element, beispielsweise ein Seil oder eine Laschenkette, so ist diese in entsprechender Weise am Rad angelenkt, jedoch liegt sie für den Arbeitshub auf einer koaxial zum Rad angeordneten Auflage kleinen Durchmessers auf. Solange sich das flexible Kraftübertragungselement auf der Auflage befindet, bestimmt der Radius der Auflage die Bewegung des Hubrahmens, und es erfolgt der Arbeitshub. Wird das Rad mittels der Antriebseinheit schrittweise so weitergedreht, daß sich das Kraftübertragungselement von der Auflage abhebt, so vergrößert sich die Bewegung des Hubrahmens entsprechend dem Abstand des gestreckten, flexiblen Kraftübertragungselements vom Raddrehpunkt, und es wird der Absenkhub eingeleitet.

Soll das Übersetzungsverhältnis zwischen der Antriebseinheit und dem Hubrahmen unveränderlich bleiben, so wird das Rad so ausgebildet, daß das Kraftübertragungselement am Radumfang aufliegen kann. In diesem Falle kann eine Unterteilung in Arbeitshub und Absenkhub ausschließlich mit Hilfe von unterschiedlichen Neigungswinkeln der Schräge erzielt werden.

Die Erfindung wird nachfolgend anhand zweier in der Zeichnung dargestellter Ausführungsbeispiele näher erläutert. In der Zeichnung zeigen:

Fig. 1 eine schematische Seitenansicht einer Antriebsvorrichtung für den Hubbalken in der oberen Position des Arbeitshubes.

Fig. 2 die gleiche Ansicht in der unteren Position des Arbeitshubes.

Fig. 3 die gleiche Ansicht nach dem ersten Absenkteilhub.

Fig. 4 die gleiche Ansicht am Ende des Absenkhubes.

Fig. 5 die Seitenansicht einer Ausführungsvariante des Hubbalkenantriebes mit veränderlicher Hubübersetzung in der oberen Position des Arbeitshubes.

Fig. 6 die gleiche Ansicht in der unteren Position des Arbeitshubes.

Von dem Hubbalkenofen ist nur der Antrieb für die Hubbalkenbewegung dargestellt. Bezüglich der Einzelheiten des Hubbalkenofens wird auf die schon genannte Offenlegungsschrift 29 26 661 verwiesen.

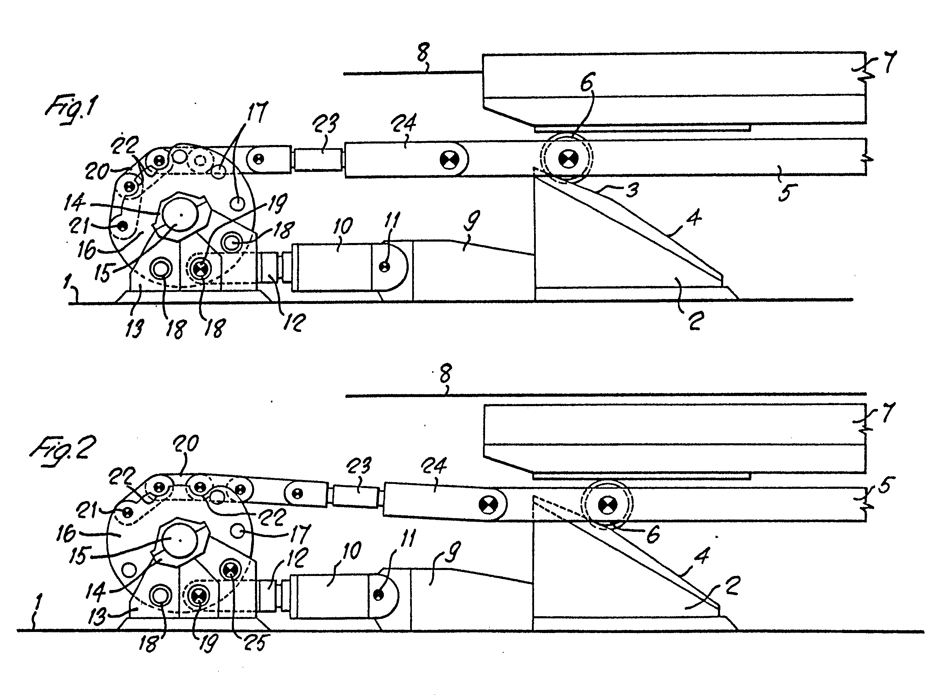

Vom Hubbalken ist schematisch ein Fundament 1 dargestellt, auf dem schräge Böcke 2 befestigt sind, die in der Ausführungsform nach Fig. 1 bis 4 mit Schienen mit einer flacheren Steigung 3 und einer steileren Steigung 4 versehen sind. An einem Hubrahmen 5 befinden sich Rollen 6, die auf den Steigungen 3 und 4 sowie unter einem Hubbalken 7 verfahrbar sind. Der Hubbalken 7 ragt um ein geringes über eine Ofensohle 8 des Hubbalkenofens hinaus, wenn der Hubbalkenantrieb, wie in Fig. 1 dargestellt, in die obere Position des Arbeitshubes verfahren ist.

Auf dem Fundament 1 ist eine Konsole 9 befestigt, an der sich eine Kolbenzylindereinheit 10 über einen Anlenkpunkt 11 abstützt. Die Kolbenzylindereinheit 10 weist eine in einen Lagerbock 13 hineingeführte Schubstange 12 auf. Auf dem Lagerbock 13 ist ein Lager 14 für eine Welle 15 mit einem Rad 16 befestigt. Auf dem Umfang des Rades 16 befinden sich Bohrungen 17, die sich mit entsprechenden Bolzendurchführungen 18 in dem Lagerbock 13 zur Deckung bringen lassen. Die Schubstange 12 läßt sich mittels eines durch eine der Bohrungen 17 im Rad 16 gesteckten Verbindungsbolzens 19 mit diesem Rad 16 in Antriebsverbindung bringen. Eine Laschenkette 20 ist einerseits mittels eines Verbindungsbolzens 21 auf dem Umfang des Rades 16 und andererseits über eine Verstellspindel 23 und eine Anlenkgabel 24 mit dem Hubrahmen 5 verbunden. Auf dem Umfang des Rades 16 sind Laschenauflagen 22 angeordnet, so daß die auf dem Rad 16 aufliegende Laschenkette 20 stets den gleichen Abstand zum Drehpunkt des Rades 16 einnimmt.

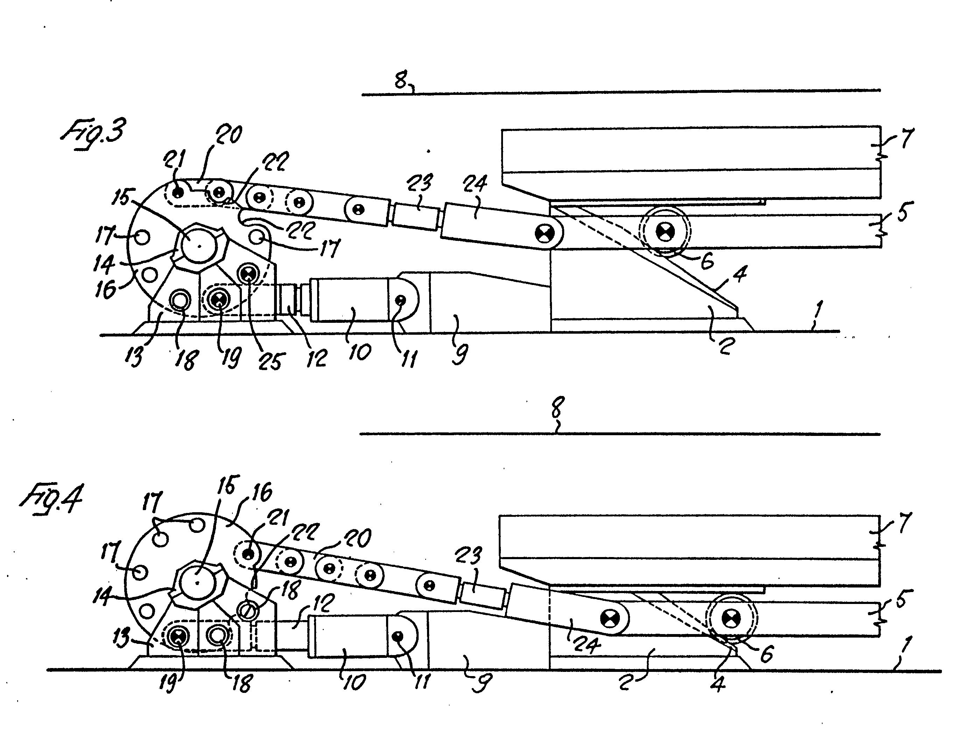

Wird die Schubstange 12 der Kolbenzylindereinheit 10 ausgefahren, so dreht sich das Rad 16 in die in Fig. 2 dargestellte Position, die Rollen 6 an dem Hubrahmen 5 bewegen sich entlang der flachen verlaufenden Steigung 3 der Schräge, und der Hubbalken 7 gelangt in die in Fig. 2 dargestellte untere Position des Arbeitshubes. Um wieder in die obere Position zu gelangen, wird die Schubstange 12 der Kolbenzylindereinheit 10 eingefahren, und der Hubbalken 7 nimmt wieder die in Fig. 1 dargestellte Position ein.

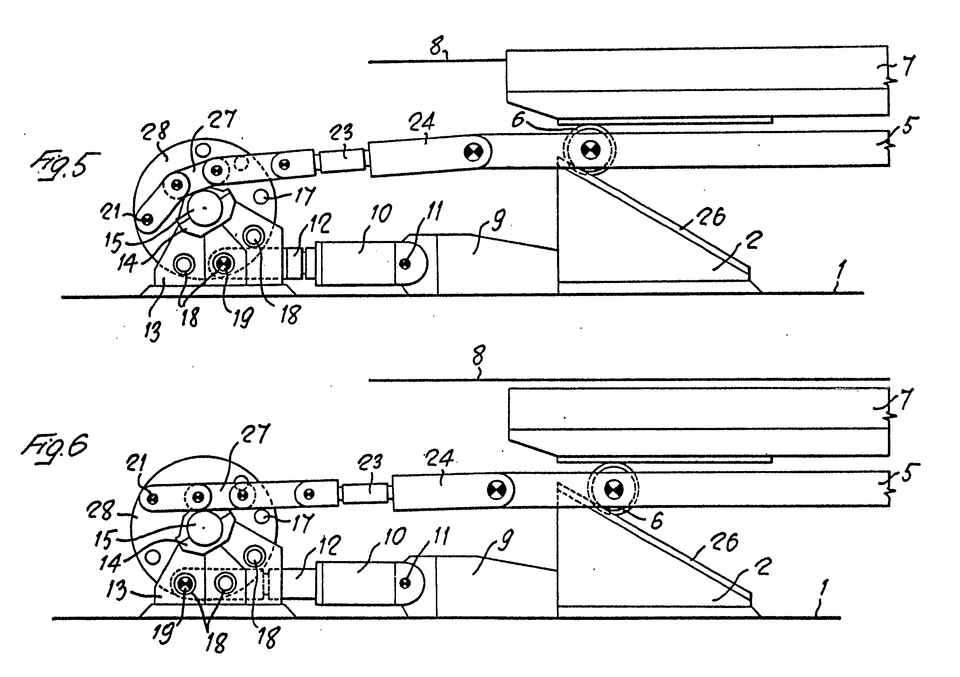

Soll der Hubbalken 7 aus der Arbeitsstellung in die Reparaturstellung abgesenkt werden, wird, wie in Fig. 2 dargestellt, zunächst ein Arretierbolzen 25 in eine Bolzendurchführung 18 des Lagerbocks 13 und eine Bohrung 17 des Rades 16 gesteckt, der Verbindungsbolzen 19 zwischen der Schubstange 12 und dem Rad 16 herausgezogen, die Schubstange 12 wieder in die Kolbenzylindereinheit 10 eingefahren und der Verbindungsbolzen 19 erneut in die Bohrung 17 und durch die Schubstange 12 gesteckt. Jetzt wird der Arretierbolzen 25 wieder entfernt, und die Schubstange kann erneut ausgefahren werden. Dieser Vorgang wiederholt sich, wie in Fig. 3 und 4 dargestellt, bis die untere Position des Absenkhubes für Reparaturzwecke erreicht ist.

Bei der in Fig. 1 bis 4 dargestellten Ausführung ist die Bewegungsübersetzung zwischen der Kolbenzylindereinheit 10 und dem Hubrahmen 5 im wesentlichen konstant, so daß die veränderliche Übersetzung ausschließlich durch die flacher verlaufende Steigung 3 und die steiler verlaufende Steigung 4 der schrägen Böcke 2 erreicht wird.

In Fig. 5 und 6 sind die Böcke 2 mit einer Schiene 26 konstanter Steigung ausgerüstet, jedoch sind die Laschenkette 27 und das Rad 28 so umgestaltet, daß das Kraftübertragungselement nicht auf dem Umfang des Rades 28 aufliegen känn, sondern, wie in Fig. 5 dargestellt, seitlich auf einer Auflage geringeren Durchmessers aufliegt. Hierdurch ergibt sich für den in Fig. 5 und 6 dargestellten Drehbereich des Rades 28 eine Übersetzung, die im wesentlichen dem Verhältnis des Abstandes der Bohrungen 17 bzw. der Mitte der Laschenkette 27 zum Raddrehpunkt entspricht. Auf diese Weise läßt sich für den Hub der Schubstange 12 der Kolbenzylindereinheit 10 entsprechend der Darstellung in Fig. 5 und 6 der Arbeitshub erreichen, während eine weitere Drehung des Rades 28 entsprechend Fig. 3 und 4 zu einem erheblich größeren Hub führt, da sich der Verbindungsbolzen 21 für die Laschenkette 27 dann im wesentlichen tangential zum Umfang des Rades 28 bewegt.

Selbstverständlich läßt sich der Antrieb mit veränderlicher Übersetzung gemäß Fig. 5 und 6 auch mit Schrägen unterschiedlicher Steigung gemäß Fig. 1 bis 4 kombinieren, um bei gleichem Hub der Kolbenzylindereinheit 10 einen unterschiedlichen Hub des Hubbalkens 7 als Arbeitshub und Reparatur- bzw. Absenkhub zu erreichen.

Besonders vorteilhaft ist bei dem erfindungsgemäßen Antrieb, daß sich der Hubrahmen bei der schrittweisen Absenkbewegung durch die gleichen Mittel und an der gleichen Stelle arretieren läßt, die zum schrittweisen Lösen und Befestigen der Schubstange 12 der Kolbenzylindereinheit 10 am Rad 16, 28 dienen.

Ein weiterer Vorteil der erfindungsgemäßen Vorrichtung besteht darin, daß die Antriebsverbindung zwischen dem Rad 16, 28 und dem Hubrahmen 5 nicht gelöst zu werden braucht . und daß keine Verlängerungen erforderlich sind.

## Patentansprüche

1. Hubbalkenhofen mit einem aus abwechselnd angeordneten Fest- und Hubbalken bestehenden Herd, bei dem den Hubbalken (7) auf bezüglich des Arbeitshubes verlängerten Schrägen (3,4) verfahrbare, in einem Hubrahmen (5) gelagerte Hubrollen (6) zugeordnet sind, gekennzeichnet durch ein einerseits an einem Hubrahmen (5) und andererseits an einem drehbar gelagerten Rad (16,28) angelenktes Kraftübertragungselement (20,27) und durch einen Lagerbock (13) für das Rad (28), der mehrere, mit mehreren auf dem Umfang des Rades (28) verteilten Bohrungen (17) zusammenwirkende Bolzendurchführungen (18) für Arretierbolzen (25) aufweist.

2. Hubbalkenofen nach Anspruch 1, gekennzeichnet durch eine Laschenkette (20,27) oder ein Seil als Kraftübertragungselement.

3. Hubbalkenofen nach Anspruch 2, gekennzeichnet durch eine koaxial zum Rad (28) angeordnete Auflage (15) für das Kraftübertragungselement (27).

4. Hubbalkenofen nach Anspruch 2 oder 3, gekennzeichnet durch eine hydraulische, elektromechanische oder pneumatische, einerseits mit dem Rad (28) in Antriebsverbindung stehende und andererseits an einem Widerlager (9) angelenkte Antriebseinheit (10,12).

5. Hubbalkenofen nach Anspruch 1, gekennzeichnet durch ein mittels eines Steckbolzens (19) mit einer Bohrung (17) im Rad (28) verbundenes Anlenkauge der Antriebseinheit (10,12).

6. Hubbalkenofen nach einem oder mehreren der Ansprüche 1 bis 5, gekennzeichnet durch eine flache Steigung (3) und eine steilere Steigung (4) der Schrägen.

7. Hubbalkenofen nach Anspruch 2 und 4 bis 6, gekennzeichnet durch ein umfangsseitig mit Auflagen (22) für ein Kraftübertragungselement (20) versehenes Rad (16).

## Claims:

1. Walking beam furnace with hearth comprising fixed and walking beams disposed in alternating order, said walking beams (7) having lifting rollers (6) allocated thereto which are adapted to move on inclined planes (3, 4) of greater length than the working stroke and which are disposed in a lifting frame (5), characterized by a power transmission element (20, 27) pivoted to the lifting frame (5) by one end thereof and to a rotatable wheel (16, 28) by its other end, and a pedestal means (13) supporting said wheel (28) which (pedestal) is provided with a plurality of passages (18) for arresting bolts (25) that coact with a plurality of bores (17) distributed over the periphery of the wheel (28).

2. Walking beam furnace according to claim 1, characterized by a sprocket chain (20, 27) or a rope as power transmission element.

3. Walking beam furnace according to claim 2, characterized by a support (15) disposed coaxially with the wheel (28) to support the power transmission element (27).

4. Walking beam furnace according to claim 2 or 3, characterized by a hydraulic, electromechanical or pneumatic drive unit (10,12) which is in driving connection with the wheel (28) and linked to an abutment bearing (9).

5. Walking beam furnace according to claim 1, characterized by a lug on the drive unit (10, 12) which is in communication with a bore (17) in the wheel (28) by means of a plug bolt (19).

6. Walking beam furnace according to any of the preceding claims 1 - 5, characterized by a shallow slope (3) and a steeper slope (4) within the inclined planes.

7. Walking beam furnace according to claim 2 and claims 4 - 6, characterized by a wheel (16) having supports (22) for a power transmission element (20) over the circumference thereof.

**Revendications**

1. Pour à longerons mobiles muni d'une sole formée de longerons fixes et mobiles disposés alternativement, dans lequel, aux longerons mobiles (7), sont adjoints des rouleaux de levage (6) montés dans un châssis de levage (5) et pouvant se déplacer sur des pentes prolongées (3, 4) relativement à la course de travail, caractérisé par un élément de transmission de force (20, 27) articulé, d'une part, à un châssis de levage (5) et, d'autre part, à une roue (16, 28) montée de manière à pouvoir tourner, et par un support de palier (13) destiné à la roue (28) qui présente plusieurs traversées de boulon (18) coopérant avec plusieurs perforations (17) distribuées à la circonférence de la roue (28) et destinées à des boulons d'arrêt (25).

2. Pour à longerons mobiles selon la revendication 1, caractérisé par une chaîne articulée (20, 27) ou un câble comme élément de transmission de force.

3. Pour à longerons mobiles selon la revendication 2, caractérisé par un appui (15) disposé coaxialement à la roue (28), destine à l'élément de transmission de force (27).

4. Pour à longerons mobiles selon l'une des revendications 2 et 3, caractérisé par un ensemble d'entraînement (10, 12) hydraulique, éléctromecanique ou pneumatique, en liaison d'entraînement, d'une part, avec la roue (28) et articulé d'autre part, à une buté (9).

5. Pour à longerons mobiles selon la revendication 1, caractérisé par un oeillet d'articulation de l'ensemble d'entraînement (10, 12) relie au moyen d'un boulon fiche (19) à une perforation (17) de la roue (28).

6. Pour à longerons mobiles selon une ou plusieurs des revendications 1 à 5, caractérisé par une inclinaison aplatie (3) et une inclinaison plus raide (4) des pentes.

7. Pour à longerons mobiles selon les revendications 2 et 4 à 6, caractérisé par une roue (16) munie circonférentiellement d'appuis (22) pour un élément de transmission de force (20).

Fig.1

8

7

17

22

20

23

24

6

14

19

3

21

18

5

16

10

11

9

15

4

1

19

18

18

12

2

Fig.2

8

7

20

22

23

24

21

5

16

22

6

15

17

4

14

12

10

11

9

2

1

13

18

19

25

0 079 003

Fig.3

Fig.4

0 079 003

Fig.5

Fig.6

0 079 003